# EUROPEAN PATENT APPLICATION

(11) **EP 3 154 291 A1**
(43) Date of publication of application: **12.04.2017**
(21) Application number: 15803900.8
(22) Date of filing: 01.06.2015
(51) Int. Cl.: H04W 36/04, H04W 48/18, H04W 92/12, H04W 92/22

(54) **GATEWAY DEVICE, FEMTOCELL-USE BASE STATION, COMMUNICATION SYSTEM, COMMUNICATION METHOD, AND STORAGE MEDIUM**

(30) Priority: 05.06.2014 JP 2014116633
(71) Applicant: NEC Corporation, Minato-ku Tokyo 108-8001 (JP)
(72) Inventor: KOGURE, Tomoya, Tokyo 108-8001 (JP); WATANABE, Yasuhiro, Tokyo 108-0073 (JP); KIDO, Takayuki, Tokyo 108-8001 (JP); AKIMOTO, Takuo, Tokyo 108-8001 (JP); MIYAGAWA, Yusuke, Tokyo 108-8001 (JP)
(74) Representative: Vossius & Partner Patentanwälte Rechtsanwälte mbB
(86) International application number: PCT/JP2015/002743
(87) International publication number: WO 2015/186331

(57) **Abstract**

When a mobile terminal currently performing a voice communication or currently initiating a call by use of a VoLTE function moves from an LTE network to 3G femto-network, a GW (100) is connected to an MME (200) disposed on an access network in the LTE network and to an FAP (300) having an IMS-femtocell area as a communication area to be handed over the voice communication or the initiation of the call. When the mobile terminal currently performing the telephone communication or currently initiating the call moves from the communication area of the LTE network to the IMS-femtocell area, a call processing of the mobile terminal is caused to be handed over from the MME (200) to the FAP (300).

## Description

### Technical Field

The present disclosure relates to a gateway device that performs a voice communication, a femtocell-use base station, a communication system, a communication method, and a storage medium.

### Background Art

In recent years, LTE (Long Term Evolution) has been introduced as a new communication standard for mobile terminals. LTE does not include an existing line switching function (voice communication function). Therefore, VoLTE (Voice over LTE) that is a technique for realizing a voice communication on an LTE network in the same manner as VoIP (Voice over IP) that is a technique for conveying a voice by IP (Internet Protocol) packet communication has been considered.

In a system in which the VoLTE is introduced, a technique referred to as SRVCC (Single Radio Voice Call Continuity) in which, when a mobile terminal moves from an LTE network to a 3G (3rd Generation) network, a voice is handed over, is standardized (see, for example, NPL 1).

Further, recently, a 3G femto base station whose communication area is a 3G femtocell (femto area) narrower than that of a wireless base station in a common 3G network is considered. The 3G femto base station is a small-sized wireless base station disposed inside a room such as an office and generally has a range of a radius of several tens meters as a communication area.

### Citation List

### Non Patent Literature

NPL 1: 3GPP TS23.216 V11.9.0

### Summary of Invention

### Technical Problem

The above-described SRVCC function is a technique for handing over a voice from an LTE network to a 3G network. Therefore, there is a problem that, when a mobile terminal currently performing a voice communication or currently initiating a call by using a VoLTE function moves from an LTE network to a 3G femto-network, it is difficult to hand over the voice communication or the initiation of the call.

An object of an exemplary embodiment is to provide a gateway device, a femtocell-use base station, a communication system, a communication method, and a storage medium that solve the above-described problem.

### Solution to Problem

A gateway device according to an exemplary embodiment
is connected to a control node disposed on an LTE (Long Term Evolution) network and a femtocell-use base station having an IMS (IP Multimedia Subsystem)-femtocell area as a communication area, and causes, when a mobile terminal currently performing a voice communication or currently initiating a call moves from a communication area of the LTE network to the IMS-femtocell area, call processing of the mobile terminal to be handed over from the control node to the femtocell-use base station.

Further, a femtocell-use base station according to another exemplary embodiment
has an IMS-femtocell area as a communication area, and transmits a message for making a call setting request to a predetermined server including a VoLTE (Voice over LTE) function, when receiving a request for handing over call processing of a mobile terminal currently performing a voice communication or currently initiating a call from a control node disposed on an LTE (Long Term Evolution) network, from a gateway device.

Further, a communication system according to another exemplary embodiment
includes:
a mobile terminal that performs a voice communication;
a control node disposed on an LTE (Long Term Evolution) network;
a femtocell-use base station having an IMS (IP Multimedia Subsystem)-femtocell area as a communication area; and
a gateway device that is connected to the control node and the femtocell-use base station and causes, when the mobile terminal currently performing a voice communication or currently initiating a call moves from a communication area of the LTE network to the IMS-femtocell area, call processing of the mobile terminal to be handed over from the control node to the femtocell-use base station, and
the femtocell-use base station transmits a message for making a call setting request to a predetermined server including a VoLTE (Voice over LTE) function, when receiving a request for handing over the call processing of the mobile terminal from the control node, from the gateway device.

Further, a communication method according to another exemplary embodiment is
a communication method in a communication system including a mobile terminal that performs a voice communication, a control node disposed on an LTE (Long Term Evolution) network, a femtocell-use base station having an IMS (IP Multimedia Subsystem)-femtocell area as a communication area, and a gateway device connected to the control node and the femtocell-use base station, and includes:
processing by the gateway device, of causing, when the mobile terminal currently performing a voice communication or currently initiating a call moves from a communication area of the LTE network to the IMS-femtocell area, call processing of the mobile terminal to be handed over from the control node to the femtocell-use base station; and
processing by the femtocell-use base station, of transmitting a message for making a call setting request to a predetermined server including a VoLTE (Voice over LTE) function, when receiving a request for handing over call processing of the mobile terminal from the control node, from the gateway device.

Further, another communication method according to another exemplary embodiment includes
processing of causing, when a mobile terminal currently performing a voice communication or currently initiating a call moves from a communication area of an LTE (Long Term Evolution) network to an IMS (IP Multimedia Subsystem)-femtocell area, call processing of the mobile terminal to be handed over from a control node disposed on an access network in the LTE network to a femtocell-use base station having the IMS-femtocell area as a communication area.

Further, a storage medium according to another exemplary embodiment
is a storage medium storing a program to be executed by a gateway device connected to a control node disposed on an LTE (Long Term Evolution) network and a femtocell-use base station having an IMS (IP Multimedia Subsystem)-femtocell area as a communication area, and stores
the program for causing the steps of, when a mobile terminal currently performing a voice communication or currently initiating a call moves from a communication area of the LTE network to the IMS-femtocell area, handing over call processing of the mobile terminal from the control node to the femtocell-use base station. Advantageous Effects of Invention

As described above, in another exemplary embodiment, when a mobile terminal currently performing a voice communication or currently initiating a call by using a VoLTE function moves from an LTE network to 3G femto-network, it is possible to hand over the voice communication or the initiation of the call.

### Brief Description of Drawings

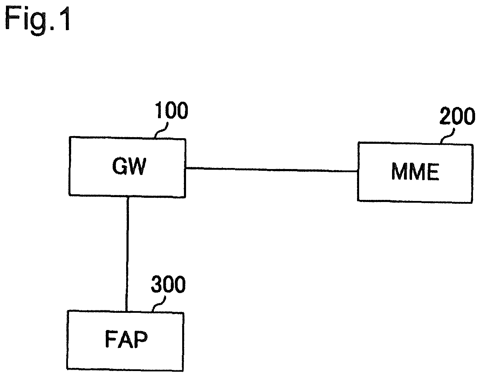

Fig. 1 is a diagram illustrating a first exemplary embodiment of a communication system including a gateway device of another exemplary embodiment;

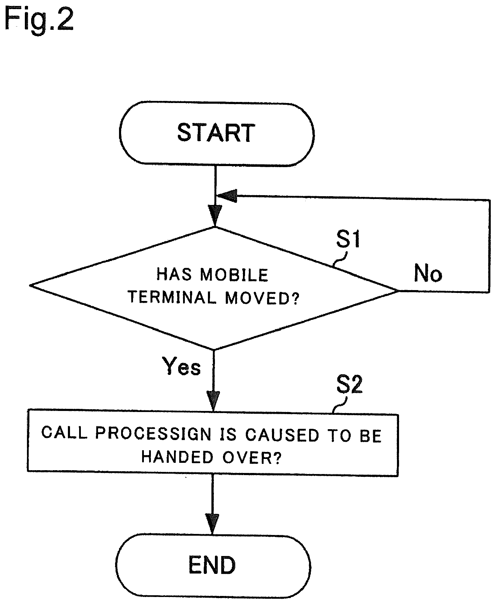

Fig. 2 is a flowchart for illustrating processing at the time when a mobile terminal currently performing a voice communication or currently initiating a call has moved from a communication area of an LTE network to an IMS-femtocell area, in a communication method in the gateway device illustrated in Fig. 1;

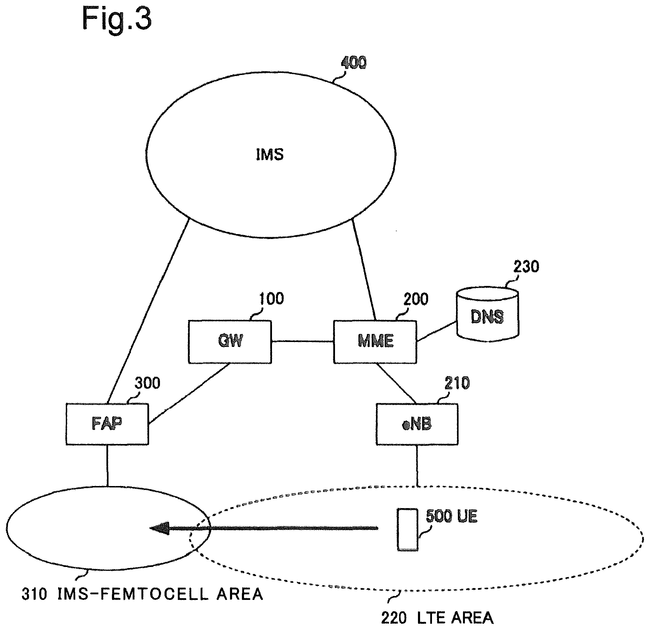

Fig. 3 is a diagram illustrating a second exemplary embodiment of a communication system including a gateway (GW) device of another exemplary embodiment;

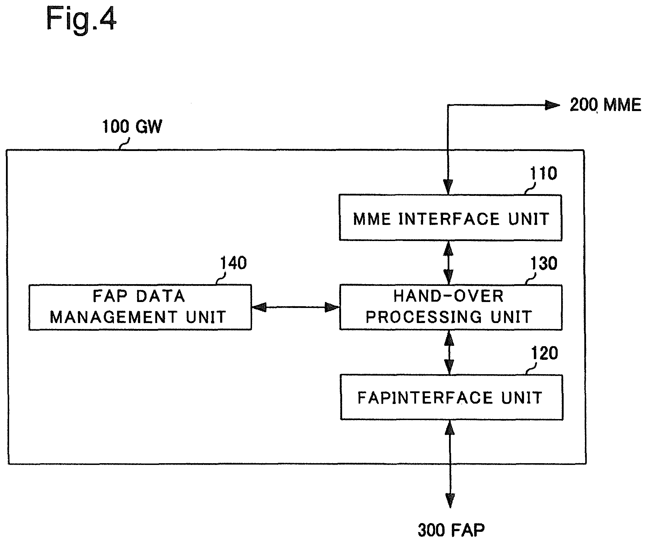

Fig. 4 is a diagram illustrating one example of an internal structure of the GW illustrated in Fig. 3;

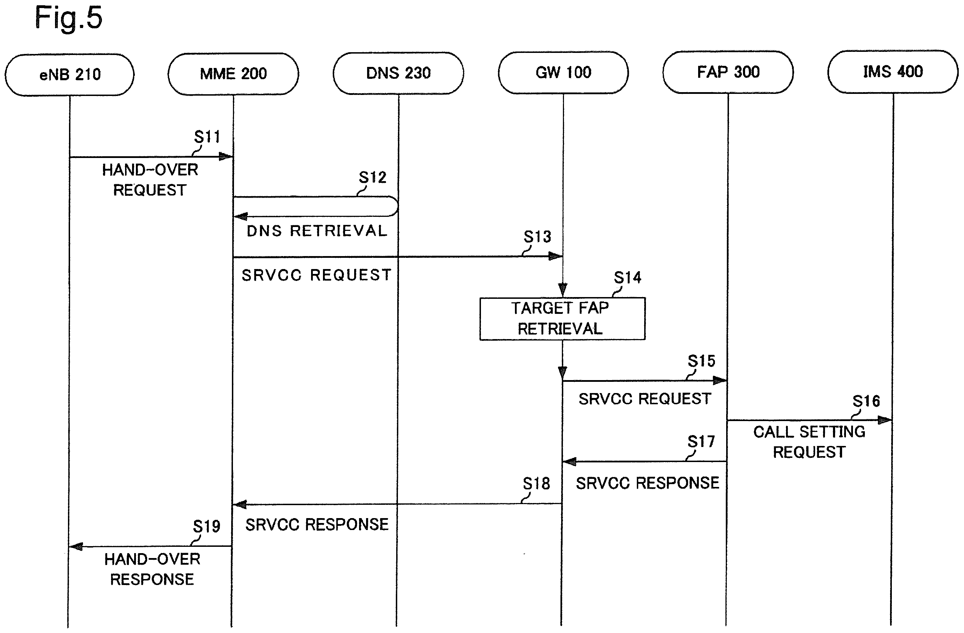

Fig. 5 is a sequence diagram for illustrating a communication method in the communication system illustrated in Fig. 3;

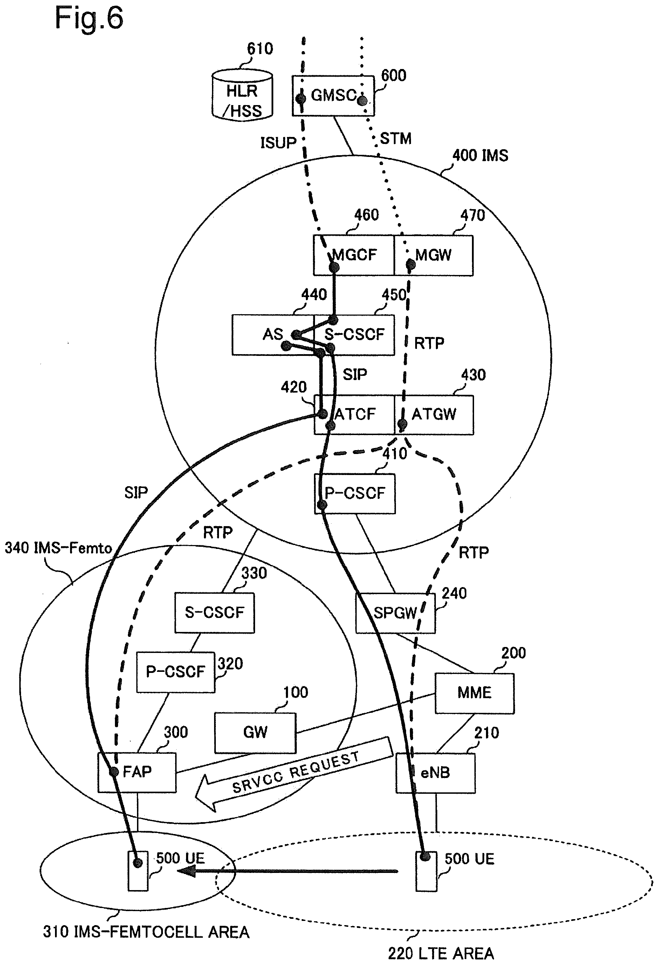

Fig. 6 is a diagram for illustrating one example of a flow of a general voice call at the time when a UE (User Equipment) illustrated in Fig. 3 has moved from an LTE area to an IMS-femtocell area;

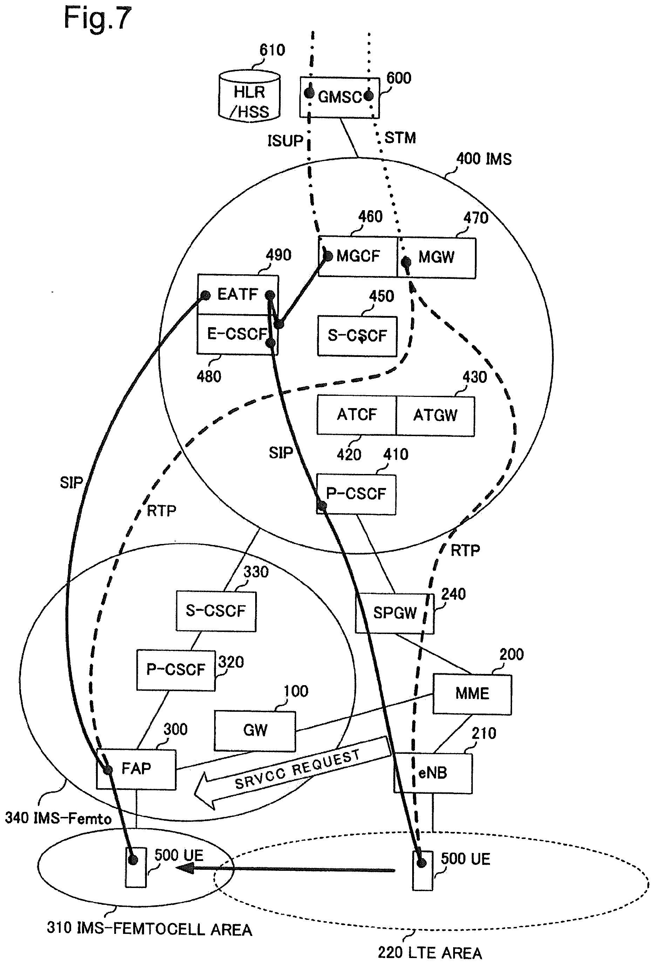

Fig. 7 is a diagram for illustrating one example of a flow of an emergency call at the time when the UE illustrated in Fig. 3 has moved from an LTE area to an IMS-femtocell area;

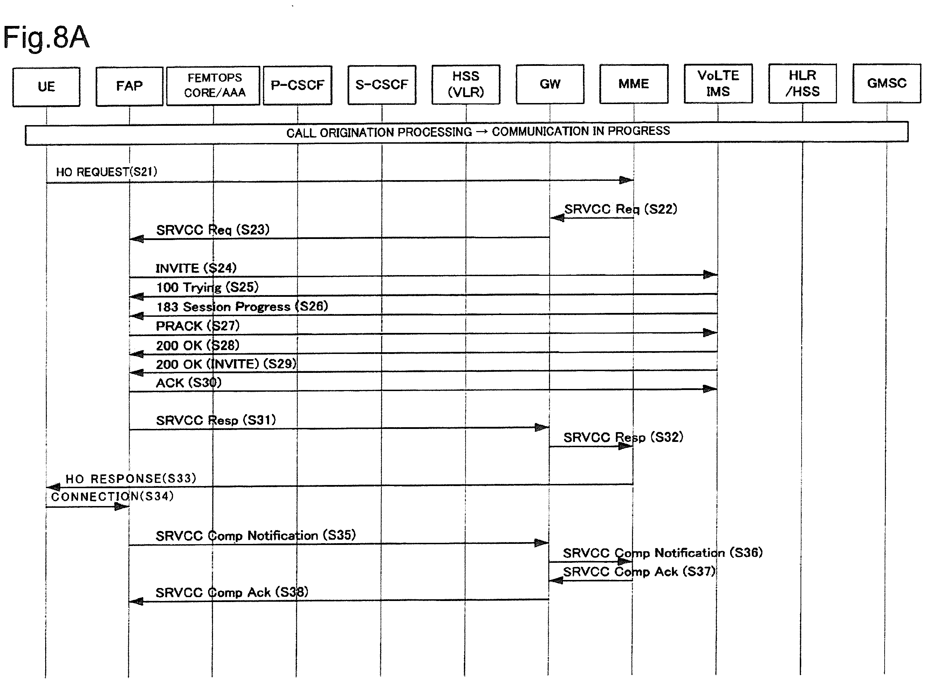

Fig. 8A is a sequence diagram for illustrating processing at the time when a UE has moved from an LTE area to an IMS-femtocell area while the UE is currently performing a communication by voice origination, in communication methods in communication network configurations illustrated in Fig. 6 and Fig. 7;

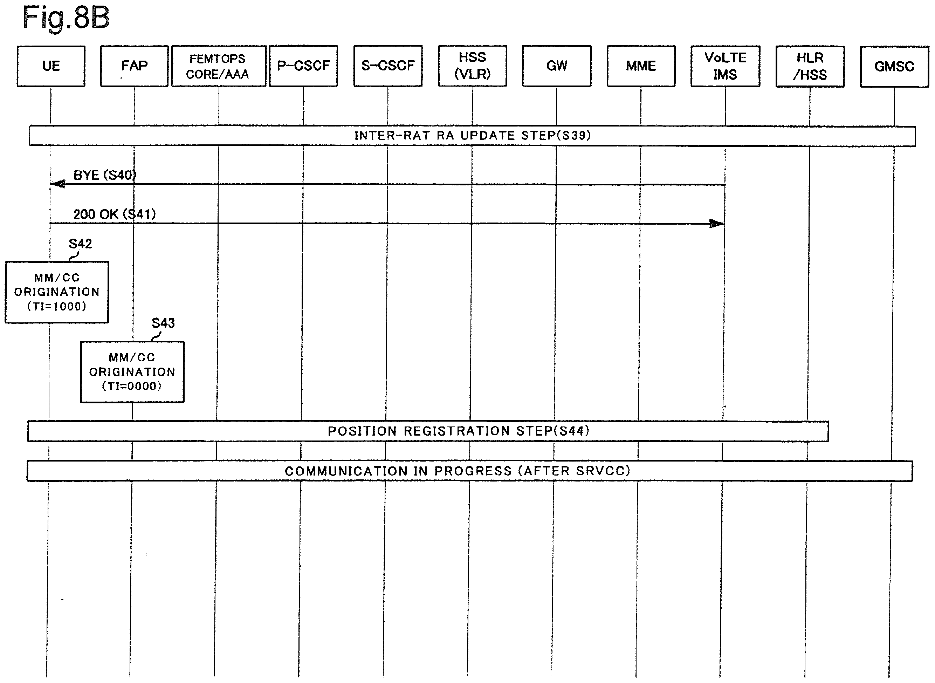

Fig. 8B is a sequence diagram for illustrating processing at the time when a UE has moved from an LTE area to an IMS-femtocell area while the UE is currently performing a communication by voice origination, in the communication methods in the communication network configurations illustrated in Fig. 6 and Fig. 7;

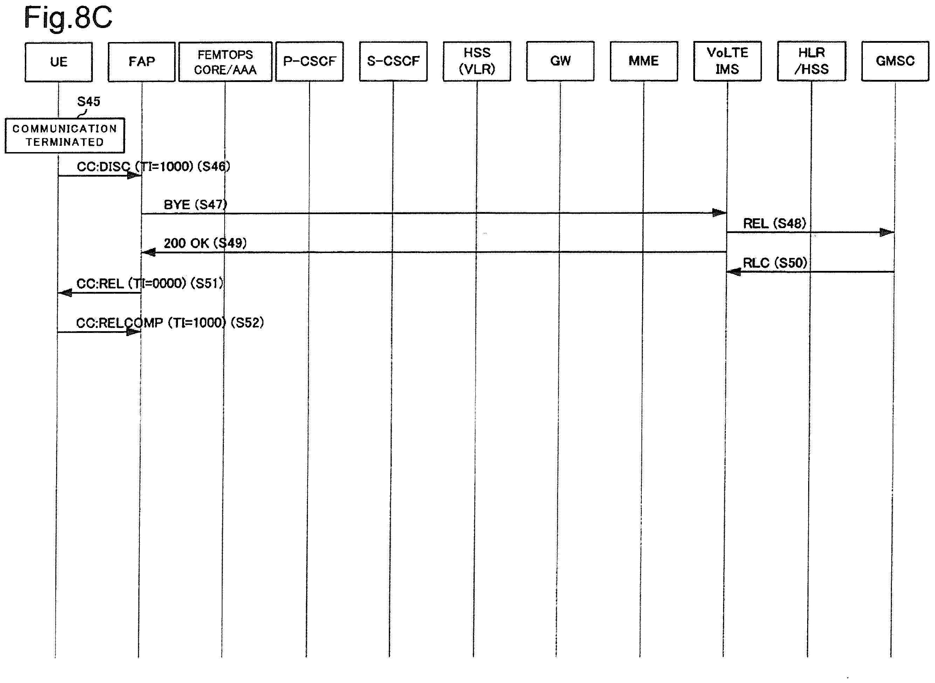

Fig. 8C is a sequence diagram for illustrating processing at the time when a UE has moved from an LTE area to an IMS-femtocell area while the UE is currently performing a communication by voice origination, in the communication methods in the communication network configurations illustrated in Fig. 6 and Fig. 7;

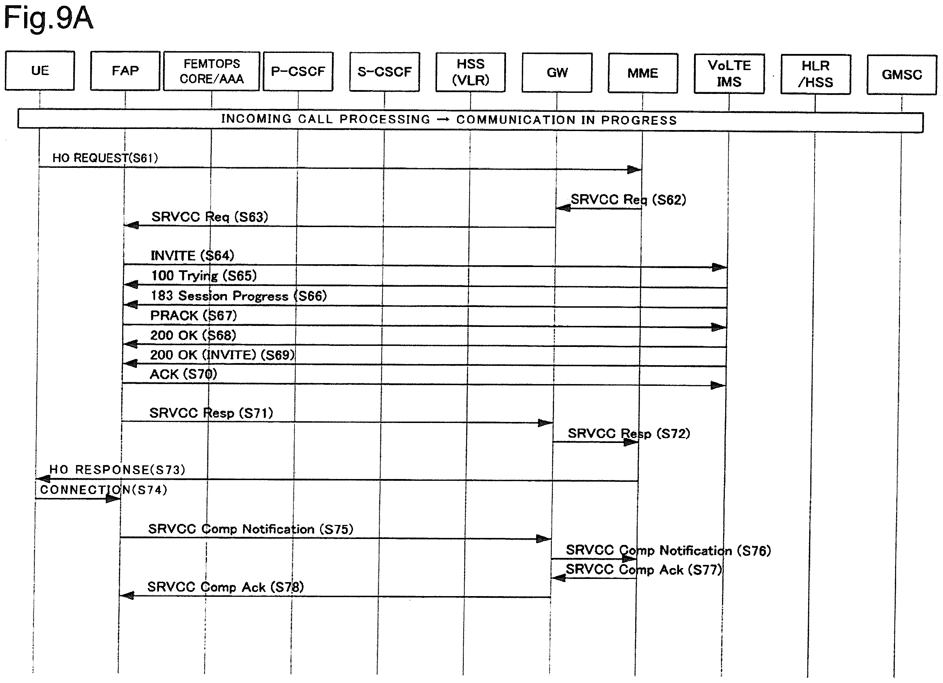

Fig. 9A is a sequence diagram for illustrating processing at the time when a UE has moved from an LTE area to an IMS-femtocell area while the UE is currently performing a communication by voice incoming, in the communication methods in the communication network configurations illustrated in Fig. 6 and Fig. 7;

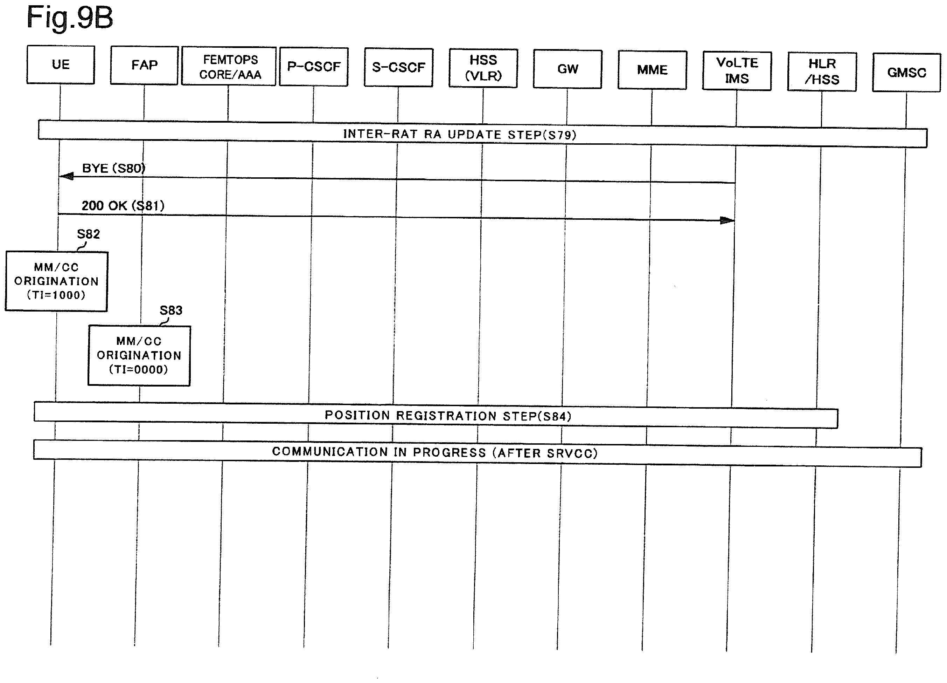

Fig. 9B is a sequence diagram for illustrating processing at the time when a UE has moved from an LTE area to an IMS-femtocell area while the UE is currently performing a communication by voice incoming, in the communication methods in the communication network configurations illustrated in Fig. 6 and Fig. 7;

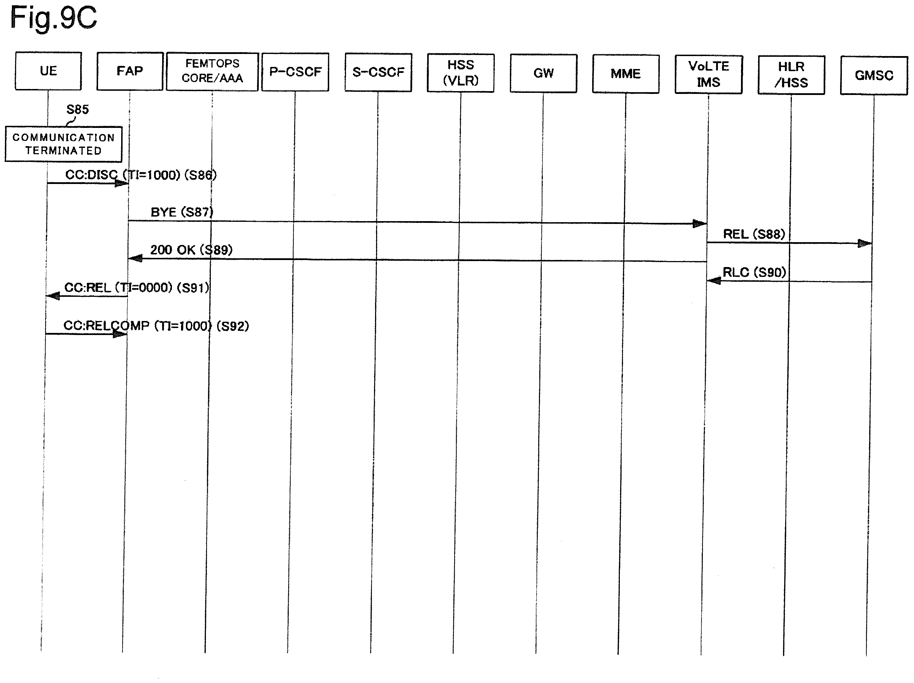

Fig. 9C is a sequence diagram for illustrating processing at the time when a UE has moved from an LTE area to an IMS-femtocell area while the UE is currently performing a communication by voice incoming, in the communication methods in the communication network configurations illustrated in Fig. 6 and Fig. 7;

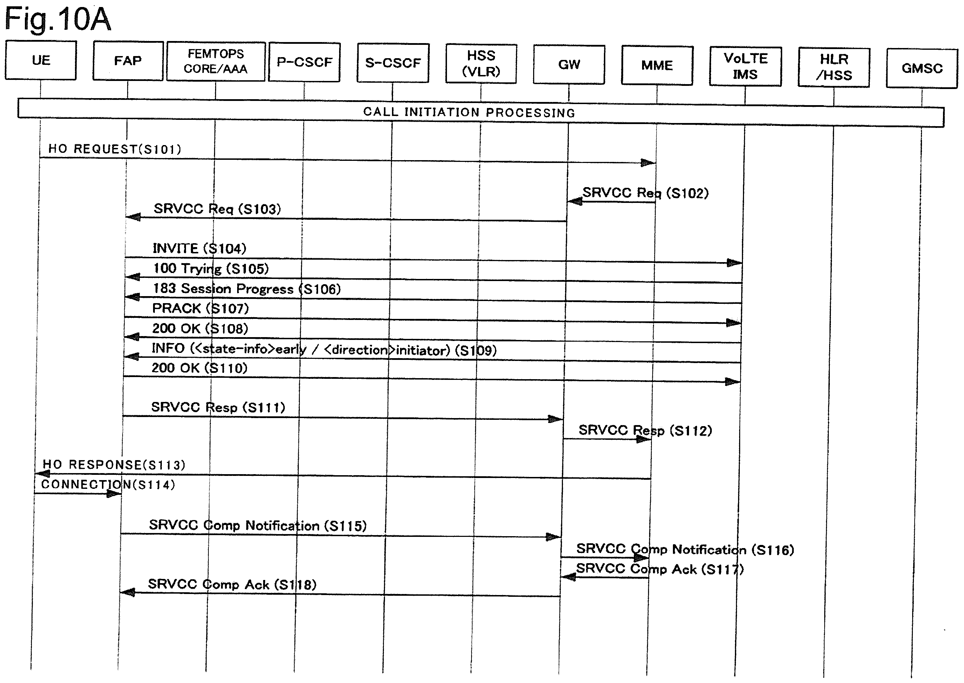

Fig. 10A is a sequence diagram for illustrating processing at the time when a UE has moved from an LTE area to an IMS-femtocell area while the UE is currently initiating a call by voice origination, in the communication methods in the communication network configurations illustrated in Fig. 6 and Fig. 7;

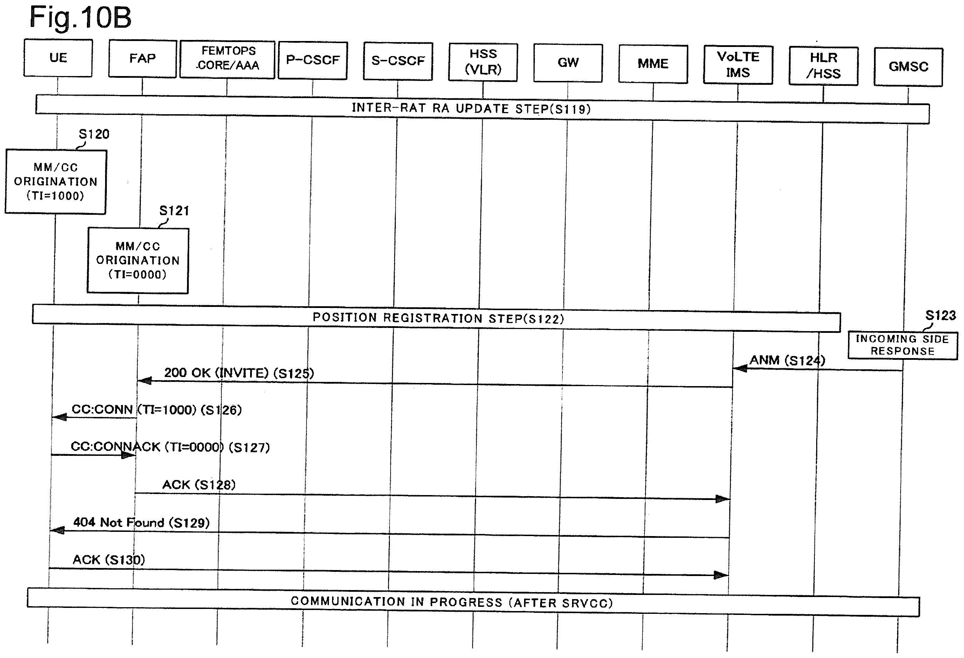

Fig. 10B is a sequence diagram for illustrating processing at the time when a UE has moved from an LTE area to an IMS-femtocell area while the UE is currently initiating a call by voice origination, in the communication methods in the communication network configurations illustrated in Fig. 6 and Fig. 7;

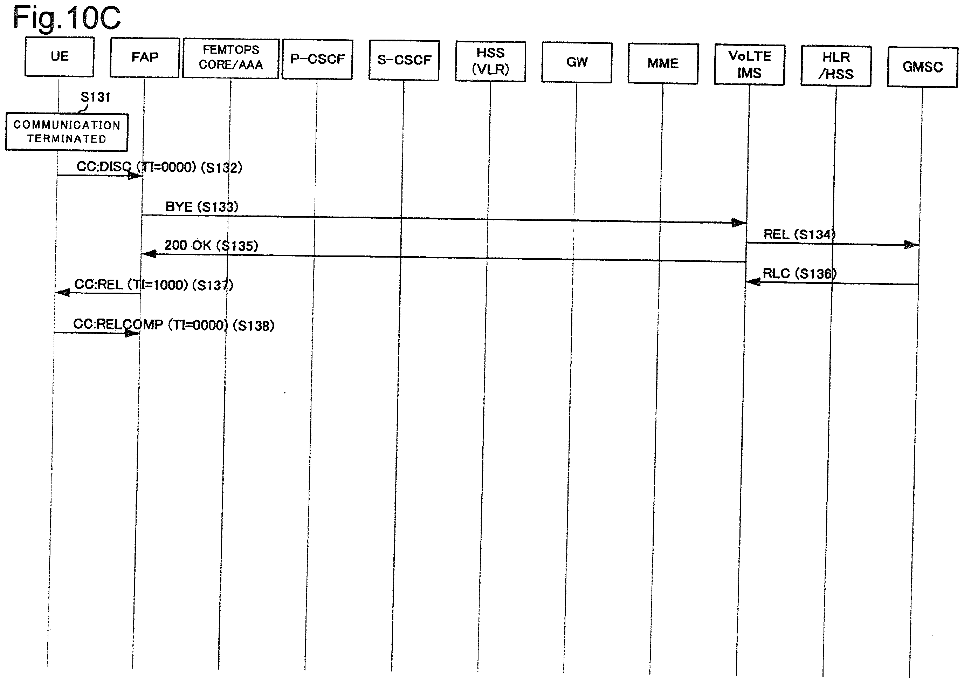

Fig. 10C is a sequence diagram for illustrating processing at the time when a UE has moved from an LTE area to an IMS-femtocell area while the UE is currently initiating a call by voice origination, in the communication methods in the communication network configurations illustrated in Fig. 6 and Fig. 7;

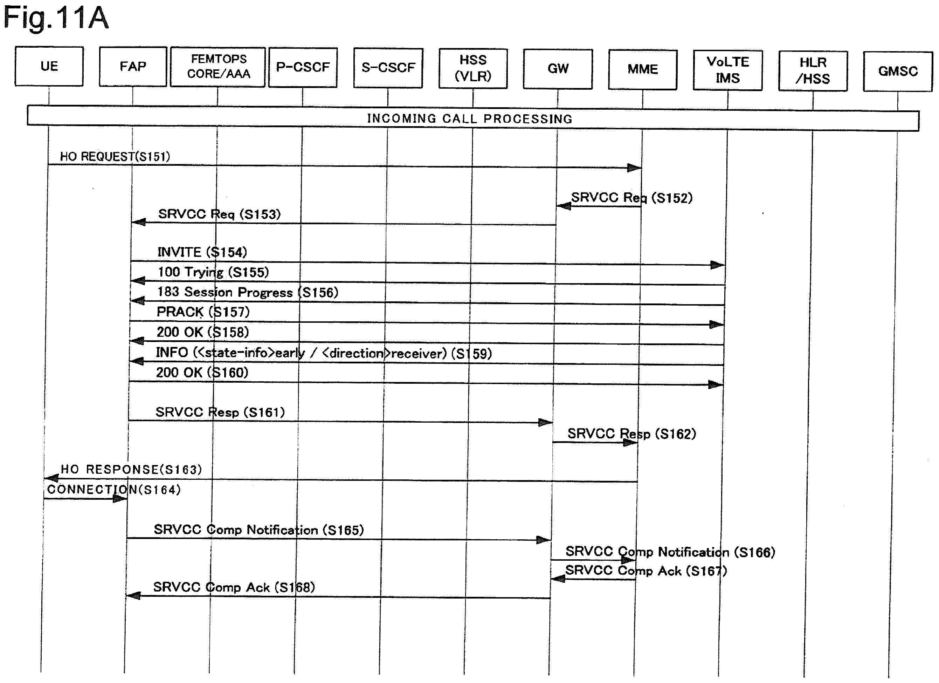

Fig. 11A is a sequence diagram for illustrating processing at the time when a UE has moved from an LTE area to an IMS-femtocell area during initiation of a call to the UE by voice incoming, in the communication methods in the communication network configurations illustrated in Fig. 6 and Fig. 7;

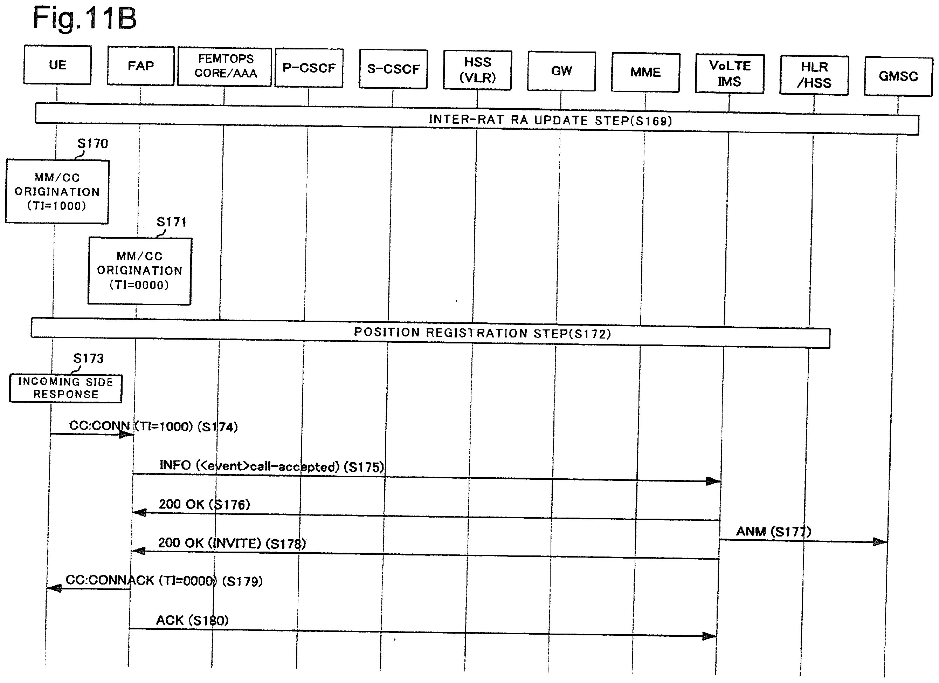

Fig. 11B is a sequence diagram for illustrating processing at the time when a UE has moved from an LTE area to an IMS-femtocell area during initiation of a call to the UE by voice incoming, in the communication methods in the communication network configurations illustrated in Fig. 6 and Fig. 7; and

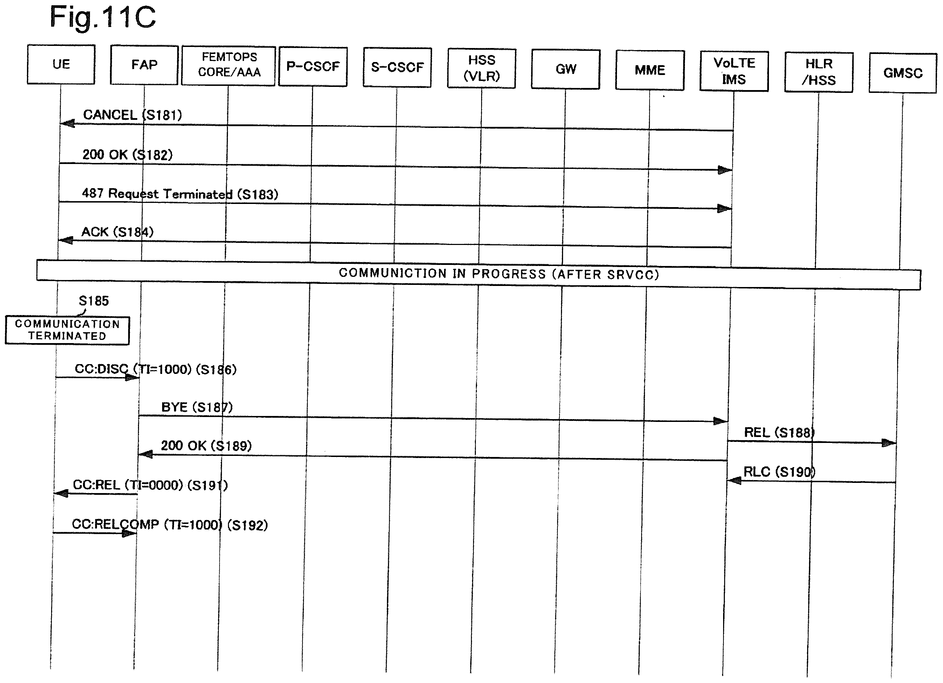

Fig. 11C is a sequence diagram for illustrating processing at the time when a UE has moved from an LTE area to an IMS-femtocell area during initiation of a call to the UE by voice incoming, in the communication methods in the communication network configurations illustrated in Fig. 6 and Fig. 7.

### Description of Embodiments

Hereinafter, exemplary embodiments will be described with reference to the accompanying drawings.

### (First Exemplary Embodiment)

Fig. 1 is a diagram illustrating a first exemplary embodiment of a communication system including a gateway device of another exemplary embodiment.

The communication system in the present exemplary embodiment includes, as illustrated in Fig. 1, a GW 100, an MME (Mobility Management Entity) 200, and an FAP (Femto Access Point) 300.

The GW 100 is a gateway device connected to the MME 200 and the FAP 300.

Further, when a mobile terminal currently performing a voice communication or currently initiating a call has moved from a communication area of an LTE network in which the MME 200 is disposed to an IMS-femtocell area that is a communication area of the FAP 300, the GW 100 causes call processing of the mobile terminal to be handed over from the MME 200 to the FAP 300. Note that a mobile terminal currently performing a voice communication or currently initiating a call in a communication area of an LTE network means that the mobile terminal is currently performing a voice communication or currently initiating a call using a VoLTE function.

The MME 200 is a control node disposed on an LTE network, and is generally referred to as an MME (Mobility Management Entity). Further, the MME 200 is disposed on an access network in the LTE network. The MME 200 is a function making C-Plane (Control-Plane) independent, which is a user control function of SGSN (Serving GPRS Support Node) in W-CDMA (Wideband-Code Division Multiple Access). Further, the MME 200 transmits/receives a control signal between an evolved NodeB that is a wireless base station disposed on the LTE network and a S-GW (Serving Gate Way) to be described later. Further, the MME 200 includes an interface with a server (HSS: Home Subscriber Server) storing user information and manages existing users. Further, the MME 200 uses facilities of a local area network in the same manner as SGSN.

The FAP 300 is a femtocell-use base station having an IMS-femtocell area as a communication area, and is generally referred to as an Femto Access Point (FAP). Further, the FAP 300 transmits, from the GW 100, a message for making a call setting request to a predetermined server including a VoLTE function when receiving a request for handing over call processing of a mobile terminal from the MME 200. This message uses a protocol of SIP (Session Initiation Protocol).

Hereinafter, a communication method in the GW 100 illustrated in Fig. 1 will be described. In the communication method in the GW 100, processing at the time when a mobile terminal currently performing a voice communication or currently initiating a call has moved from a communication area of an LTE network to an IMS-femtocell area will be described.

Fig. 2 is a flowchart for illustrating processing at the time when a mobile terminal currently performing a voice communication or currently initiating a call has moved from a communication area of an LTE network to an IMS-femtocell area, in the communication method in the GW 100 illustrated in Fig. 1.

When the GW 100 recognizes that a mobile terminal currently performing a voice communication or currently initiating a call has moved from a communication area of an LTE network to an IMS-femtocell area (step S1), the GW 100 causes call processing of the mobile terminal to be handed over from the MME 200 to the FAP 300 (step S2). Detailed processing will be described in a second exemplary embodiment.

By disposing the GW 100 including an SRVCC function between the MME 200 and the FAP 300 in this manner, when a mobile terminal currently performing a voice communication or currently initiating a call using a VoLTE function has moved from an LTE network to a 3G femto network, the voice communication or the initiation of the call can be handed over.

### (Second Exemplary Embodiment)

Fig. 3 is a diagram illustrating a second exemplary embodiment of a communication system including a gateway device of another exemplary embodiment.

The communication system in the present exemplary embodiment includes, as illustrated in Fig. 3, a GW 100, an MME 200, an eNB 210, a DNS 230, an FAP 300, and an IMS 400. Further, the MME 200 and the FAP 300 are connected to the IMS 400.

The GW 100, the MME 200, and the FAP 300 are the same as those in the first exemplary embodiment. A communication area of the FAP 300 is an IMS-femtocell area 310.

The eNB 210 is a wireless base station (evolved NodeB) having an LTE area 220 as a communication area. Further, the eNB 210 is connected to the MME 200 and controlled by the MME 200.

The DNS 230 is generally referred to as a Domain Name System and retrieves an address managed by a DNS server. On the basis of a request from the MME 200, address solution of the GW 100 is performed.

The IMS 400 is a communication network of an IP Multimedia Subsystem and is specifically a VoLTE IMS including a VoLTE function.

The UE 500 is a mobile terminal (User Equipment) that is movable and carried by a user.

Fig. 4 is a diagram illustrating one example of an internal structure of the GW 100 illustrated in Fig. 3.

The GW 100 illustrated in Fig. 3 includes, as illustrated in Fig. 4, an MME interface unit 110, an FAP interface unit 120, a hand-over processing unit 130, and an FAP data management unit 140. Fig. 4 illustrates, of the components included in the GW 100 illustrated in Fig. 3, one example of main components according to the present exemplary embodiment.

The MME interface unit 110 includes an interface function with the MME 200. A protocol used between the MME interface unit 110 and the MME 200 is a protocol of GTP (General Packet Radio System Tunneling Protocol) of the 3GPP (3rd Generation Partnership Project) standards.

The FAP interface unit 120 includes an interface function with the FAP 300.

The hand-over processing unit 130 requests, when the MME interface unit 110 receives a request for SRVCC from the MME 200, the FAP data management unit 140 to retrieve a transmission destination of a request signal for making a request for hand-over (SRVCC) of call processing of the UE 500. For the request for SRVCC from the MME 200, a predetermined signal is used. Further, the hand-over processing unit 130 transmits, using the SRVCC function, a request signal via the FAP interface unit 120 on the basis of the retrieval result reported from the FAP data management unit 140, i.e. to a femtocell-use base station of a transmission destination indicated in the retrieval result. Further, the hand-over processing unit 130 transmits, when after transmission of the request signal to the FAP 300, a response signal (a first response signal) corresponding to the request signal is transmitted from the FAP 300, a response signal (a second response signal) corresponding to a predetermined signal received by the MME interface unit 110 to the MME 200 via the MME interface unit 110.

The FAP data management unit 140 manages a femtocell-use base station including the FAP 300.

The FAP data management unit 140 may include, by itself, a database that stores information of femtocell-use base stations or may manage information of femtocell-use base stations stored on a database disposed externally. Further, the FAP data management unit 140 retrieves, when requested to retrieve a transmission destination of a request signal from the hand-over processing unit 130, the transmission destination of the request signal from the managed femtocell-use base stations. Further, the FAP data management unit 140 reports the retrieval result to the hand-over processing unit 130.

Hereinafter, a communication method in the mode illustrated in Fig. 3 will be described.

Fig. 5 is a sequence diagram for illustrating a communication method in the communication system illustrated in Fig. 3.

First, when the UE 500 currently performing a voice communication or currently initiating a call has moved from an LTE area 220 to an IMS-femtocell area 310 and thereby a request for hand-over from the UE 500 is made, the eNB 210 requests the MME 200 to execute hand-over processing of the UE 500 (step S11). At that time, the UE 500 may be an originating side or an incoming side in a voice communication or a call initiation.

The MME 200 requests the DNS 230 to perform address retrieval of the GW 100 and acquires an IP address of the GW 100 from the DNS 230 (step S12). The MME 200 having acquired the IP address of the GW 100 makes a request for SRVCC to the GW 100 using a protocol of GTP (step S13). As described above, for this request, a predetermined signal is used.

The hand-over processing unit 130 requests, when the MME interface unit 110 receives a request for SRVCC from the MME 200, the FAP data management unit 140 to retrieve a transmission destination of a request signal for making a request for hand-over (SRVCC) of call processing of the UE 500. The FAP data management unit 140 retrieves, when requested to retrieve the transmission destination of the request signal by the hand-over processing unit 130, a femtocell-use base station to be the transmission destination of the request signal among the managed femtocell-use base stations (step S14). Further, the FAP data management unit 140 reports the retrieval result to the hand-over processing unit 130. The hand-over processing unit 130 makes, via the FAP interface unit 120, an SRVCC request to the FAP 300 of the transmission destination indicated in the retrieval result reported from the FAP data management unit 140 (step S15).

The FAP 300 makes a call setting request of the UE 500 to the IMS 400 (step S16). For this request, a predetermined SIP message is transmitted.

Further, the FAP 300 makes a response (SRVCC response) corresponding to the request of step S15 to the GW 100 (step S 17). When the FAP interface unit 120 receives the response made by the FAP 300, the hand-over processing unit 130 makes a response (SRVCC response) corresponding to the request of step S13 to the MME 200 via the MME interface unit 110 (step S18). Subsequently, the MME 200 makes a response corresponding to the request for hand-over of step S11 to the eNB 210 (step S19). The responses of steps S17 to S19 are realized by transmitting/receiving predetermined signals capable of recognizing that responses have been made on the transmission side and the reception side, respectively.

Hereinafter, a flow of signals will be described further in detail. Description will be made on the basis of a general voice call and an emergency call separately.

Fig. 6 is a diagram for illustrating one example of a flow of a general voice call at the time when the UE 500 illustrated in Fig. 3 has moved from the LTE area 220 to the IMS-femtocell area 310.

In a communication network configuration illustrated in Fig. 6, a GW 100, an MME 200, an eNB 210, an LTE area 220, an FAP 300, an IMS-femtocell area 310, an IMS 400, and a UE 500 are the same as those illustrated in Fig. 3.

An SPGW 240 is illustrated by collectively including an S-GW (Serving Gate Way) and a P-GW (Packet Data Network Gate Way). The S-GW is a node that relays a packet as a base point of routing of an IP packet transferred to/from the UE 500. The P-GW is a node that manages an IP address of the UE 500 and relays an IP packet transferred to/from an external communication network.

A GMSC 600 is a Gateway Mobile-services Switching Center. Further, an HLR/HSS 610 is a Home Location Register/Home Subscriber Server. The GMSC 600 and the HLR/HSS 610 are the same as existing ones.

Further, the IMS 400 includes a P-CSCF 410, an ATCF 420, an ATGW 430, an AS 440, an S-CSCF 450, an MGCF 460, and an MGW 470.

The P-CSCF (Proxy Call Session Control Function) 410 is an SIP proxy server that holds, as an SIP registration server, subscriber information and current position information of a user downloaded from a predetermined server and controls a protocol of SIP.

The ATCF 420 is an Access Transfer Control Function including a function of anchoring an SIP signal that is a C-Plane on a local area network side.

The ATGW 430 is an Access Transfer Gate Way including a function of anchoring a voice media signal that is a U-Plane (User-Plane) on a local area network side.

The AS 440 is an Application Server that hosts and executes a service group. The AS 440 uses SIP for an interface with the S-CSCF 450.

The S-CSCF (Serving Call Session Control Function) 450 is an SIP server that holds, as an SIP registration server, subscriber information and current position information of a user downloaded from a predetermined server and executes session control.

The MGCF (Media Gateway Control Function) 460 is a gateway device that converts a call control protocol between SIP and ISUP (ISDN User Part) and connects the S-CSCF 450 and the GMSC 600 that is a higher-level device.

The MGW 470 is a Media Gate Way that includes an interface function with a voice media signal that is a U-Plane and performs conversion between RTP (Real Time Transport Protocol) and PCM (Pulse Code Modulation).

Further, within a core of a network of the IMS-Femto 340, the GW 100, the FAP 300, the P-CSCF 320, and the S-CSCF 330 are disposed.

The GW 100 is connected to the MME 200 and the FAP 300. Further, the GW 100 has an Sv point between itself and the MME 200 as a termination and makes a request for SRVCC to the FAP 300. The Sv point is an interface defined as a Reference Point by the SRVCC function.

The FAP 300 includes an 12 interface of SIP between itself and the ATCF 420. Further, the FAP 300 connects a U-Plane between itself and the ATGW 430.

The P-CSCF 320 performs the same function as the P-CSCF 410 within the IMS-Femto 340.

The S-CSCF 330 performs the same function as the S-CSCF 450 within the IMS-Femto 340.

In the communication network configuration illustrated in Fig. 6, when the UE 500 currently performing a general voice call communication or currently initiating a call exists within the LTE area 220, a U-Plane signal is transmitted from the UE 500 to the MGW 470 via the eNB 210, the MME 200, the SPGW 240, and the ATGW 430 using a protocol of RTP. Further, the U-Plane signal transmitted to the MGW 470 is transferred to the GMSC 600 using a transfer mode of STM (Synchronous Transfer Mode) and further transferred from the GMSC 600 to another communication network.

On the other hand, a C-Plane signal is transferred to/from the MGCF 460 via the eNB 210, the MME 200, the SPGW 240, the P-CSCF 410, the ATCF 420, the S-CSCF 450, and the AS 440 using a protocol of SIP. Further, the C-Plane signal is transferred between the MGCF 460 and the GMSC 600 and between the GMSC 600 and another network using a signal system of ISUP.

When the UE 500 currently performing a general voice call communication or currently initiating a call moves from the LTE area 220 to the IMS-femtocell area 310 and thereby an SRVCC request is made from the MME 200 to the GW 100, the SRVCC request is made from the GW 100 to the FAP 300. Then, an INVITE connection is established from the FAP 300 to the ATCF 420. Thereafter, a U-Plane signal is transmitted/received between the FAP 300 and the ATGW 430 using a protocol of RTP.

Fig. 7 is a diagram for illustrating one example of a flow of an emergency call at the time when the UE 500 illustrated in Fig. 3 has moved from the LTE area 220 to the IMS-femtocell area 310.

Fig. 7 does not illustrate the AS 440 in the communication network configuration illustrated in Fig. 6 but illustrates an E-CSCF 480 and an EATF 490.

The E-CSCF (Emergency-Call Session Control Function) 480 is a node that receives an emergency call request transmitted by the P-CSCF 410.

The EATF (Emergency Access Transfer Function) 490 is a node that transfers a session from the E-CSCF 480 to another communication network.

Other components are the same as those illustrated in Fig. 6.

In a communication network configuration illustrated in Fig. 7, when UE 500 currently performing an emergency call communication or currently initiating a call exists within the LTE area 220, a U-Plane signal is transmitted from the UE 500 to the MGW 470 via the eNB 210, the MME 200, and the SPGW 240 using a protocol of RTP. Further, the U-Plane signal transmitted to the MGW 470 is transferred to the GMSC 600 using a transfer mode of STM and further transferred from the GMSC 600 to another communication network.

On the other hand, a C-Plane signal is transferred to/from the MGCF 460 via the eNB 210, the MME 200, the SPGW 240, the P-CSCF 410, the E-CSCF 480, and the EATF 490 using a protocol of SIP. Further, the C-Plane signal is transferred between the MGCF 460 and the GMSC 600 and between the GMSC 600 and another network using a signal system of ISUP.

When the UE 500 currently performing an emergency call communication or currently initiating a call moves from the LTE area 220 to the IMS-femtocell area 310 and thereby an SRVCC request is made from the MME 200 to the GW 100, the SRVCC request is made from the GW 100 to the FAP 300. An INVITE connection is established from the FAP 300 to the EATF 490. Thereafter, a U-Plane signal is transmitted/received between the FAP 300 and the MGW 470 using a protocol of RTP.

Hereinafter, the communication methods of the communication network configurations illustrated in Fig. 6 and Fig. 7 will be described.

Figs. 8A to 8C are sequence diagrams for illustrating processing at the time when the UE 500 has moved from the LTE area 220 to the IMS-femtocell area 310 while the UE 500 is currently performing a communication by voice origination, in the communication methods in the communication network configurations illustrated in Fig. 6 and Fig. 7.

In Figs. 8A to 8C, UE represents the UE 500 illustrated in Fig. 6 and Fig. 7. Further, FAP represents the FAP 300 illustrated in Fig. 6 and Fig. 7. Further, Femto PS core/AAA is a node disposed within the IMS-Femto 340 illustrated in Fig. 6 and Fig. 7 to register position information of a subscriber and authenticate the subscriber. Further, P-CSCF represents the P-CSCF 320 illustrated in Fig. 6 and Fig. 7. Further, S-CSCF represents the S-CSCF 330 illustrated in Fig. 6 and Fig. 7. Further, HSS (VLR) is a server disposed within the IMS-Femto 340 illustrated in Fig. 6 and Fig. 7 to store subscriber information. Further, GW represents the GW 100 illustrated in Fig. 6 and Fig. 7. Further, MME represents the MME 200 illustrated in Fig. 6 and Fig. 7. Further, VoLTE IMS represents the IMS 400 illustrated in Fig. 6 and Fig. 7. Further, HLR/HSS represents the HLR/HSS 610 illustrated in Fig. 6 and Fig. 7.

Further, GMSC represents the GMSC 600 illustrated in Fig. 6 and Fig. 7. This is the same in Figs. 9A to 9C, Figs. 10A to 10C, and Figs. 11A to 11C.

When the UE 500 has moved from the LTE area 220 to the IMS-femtocell area 310 while currently performing a communication by originating a voice, the UE 500 requests the MME 200 to execute hand-over processing via the eNB 210 (step S21). The MME 200 transmits an SRVCC req to the GW 100 to make a request for SRVCC (step S22).

When the communication currently being performed by the UE 500 is a general voice call, the SRVCC req includes an STN-SR (Session Transfer Number for Single Radio Voice Call Continuity). In the general voice call, an STN-SR is held on the HLR/HSS upon position registration on the VoLTE IMS side before voice origination, and the STN-SR is added to the SRVCC req. Further, when the communication currently being performed by the UE 500 is an emergency call, the SRVCC req does not include an STN-SR.

When the MME interface unit 110 of GW 100 receives the SRVCC req transmitted from the MME 200, the hand-over processing unit 130 requests the FAP data management unit 140 to retrieve a transmission destination of the SRVCC req that is a request signal for making a request for hand-over (SRVCC) of call processing of the UE 500. The FAP data management unit 140 retrieves, when requested to retrieve the transmission destination of the SRVCC req by the hand-over processing unit 130, a femtocell-use base station which becomes the transmission destination of the SRVCC req among the managed femtocell-use base stations. Subsequently, the FAP data management unit 140 reports the retrieval result to the hand-over processing unit 130. The hand-over processing unit 130 transmits, via the FAP interface unit 120, the SRVCC req to the FAP 300 of the transmission destination indicated in the retrieval result reported from the FAP data management unit 140 (step S23). When the communication currently being performed by the UE 500 is a general voice call, an SRVCC req transmitted from the GW 100 to the FAP 300 also includes an STN-SR.

Next, the FAP 300 makes a call setting request for the UE 500 to the VoLTE IMS using a protocol of SIP. First, the FAP 300 transmits, by incorporating an STN-SR into an INVITE, the INVITE to the ATCF 420 of the VoLTE IMS (step S24). At that time, when the communication currently being performed by the UE 500 is a general voice call, the FAP 300 refers to an STN-SR included in the SRVCC req transmitted from the GW 100 and can thereby identify the ATCF 420 to be a transmission destination of the INVITE. Further, when the communication currently being performed by the UE 500 is an emergency call, the SRVCC req transmitted from the GW 100 does not include an STN-SR, and therefore, the FAP 300 transmits, by incorporating an E-STN-SR into the INVITE, the INVITE to the EATF 490 of the VoLTE IMS. The E-STN-SR is a number for assignment on an origination side that originates a call, and is therefore added by the IMS-Femto 340. Here, the FAP 300 adds an E-STN-SR.

For the INVITE, the VoLTE IMS transmits a provisional response 100 Trying indicating that a trial is currently being made to the FAP 300 (step S25). Further, the VoLTE IMS transmits a 183 Session Progress indicating that the session has progressed to the FAP 300 (step S26). Then, the FAP 300 transmits a PRACK for making a request for acknowledging the provisional responses of steps S25 and S26 to the VoLTE IMS (step S27).

Thereafter, the VoLTE IMS transmits a 200 OK that is a response to step S27 to the FAP 300 (step S28). Further, the VoLTE IMS transmits a 200 OK that is a response to the INVITE of step S24 to the FAP 300 (step S29). The FAP 300 transmits an ACK that is a success response of the INVITE message to the VoLTE IMS (step S30).

Subsequently, the FAP 300 makes, by transmitting an SRVCC Resp, a response (SRVCC response) corresponding to the request of step S23 to the GW 100 (step S31). When the FAP interface unit 120 receives the SRVCC Resp transmitted from the FAP 300, the hand-over processing unit 130 transmits the SRVCC Resp to the MME 200 via the MME interface unit 110 and thereby makes a response (SRVCC response) corresponding to the request of step S22 (step S32).

Next, the MME 200 makes a response corresponding to the request for hand-over processing of step S21 to the UE 500 via the eNB 210 (step S33). Then, the UE 500 is connected to the FAP 300 (step S34).

The FAP 300 then transmits an SRVCC Comp Notification indicating that a voice hand-over using the SRVCC function has been completed to the GW 100 (step S35). The hand-over processing unit 130 of the GW 100 transmits the SRVCC Comp Notification to the MME 200 via the MME interface unit 110 (step S36). The MME 200 having received the SRVCC Comp Notification transmits an SRVCC Comp Ack that is a response thereto to the GW 100 (step S37). Then, the hand-over processing unit 130 of the GW 100 transmits the SRVCC Comp Ack that is a response to step S35 to the FAP 300 via the FAP interface unit 120 (step S38).

Thereafter, the UE 500, the FAP 300, the PS/AAA, the HSS (VLR), the MME 200, and the HLR/HSS execute a normal Inter-RAT (Radio Access Technology) RA (Routing Areas) Update step (step S39).

Subsequently, the VoLTE IMS transmits a BYE to the UE 500 (step S40), and the UE 500 transmits, as a response thereto, a 200 OK to the VoLTE IMS (step S41). A call before voice hand-over is thus disconnected.

Then, the UE 500 originates an MM (Mobility Management)/CC (Call Control) (step S42). The MM means processing for mobility management such as position registration and authentication of the UE 500. Further, the CC means processing for control such as call setting and call release. A value of TI (Transaction Identification) at that time is "1000." Further, in the same manner, the FAP 300 originates an MM/CC (step S43). A value of TI at that time is "0000."

Then, among the UE 500, the FAP 300, the P-CSCF 320, the S-CSCF 330, the HSS (VLR), and the HLR/HSS 610, a position registration step of the UE 500 is executed (step S44). At that time, an authentication step of the UE 500 is also executed. Then, a communication after SRVCC is performed.

Thereafter, when the UE 500 terminates the communication (step S45), the UE 500 makes a link disconnection request (DISC) to the FAP 300 using CC processing (step S46). A value of TI at that time is "1000." The FAP 300 then transmits a BYE for disconnecting the call to the VoLTE IMS (step S47). The VoLTE IMS transmits a REL (RELEASE) for making a request for releasing the call to the GMSC 600 (step S48). Further, the VoLTE IMS transmits a 200 OK to the FAP 300 as a response to step S47 (step S49). Further, the GMSC 600 transmits, when completing the release of the call, an RLC (Release Complete) to the VoLTE IMS (step S50). The REL and RLC are signals defined in ISUP. This is the same in the following description.

The FAP 300 having received the 200 OK from the VoLTE IMS transmits a link release (REL) to the UE 500 using CC processing (step S51). A value of TI at that time is "0000." Then, the UE 500 transmits a RELCOMP to the FAP 300 (step S52). A value of TI at that time is "1000."

Figs. 9A to 9C are sequence diagrams for illustrating processing at the time when the UE 500 has moved from the LTE area 220 to the IMS-femtocell area 310 while the UE 500 is currently performing a communication by voice incoming, in the communication methods in the communication network configurations illustrated in Fig. 6 and Fig. 7.

When the UE 500 has moved from the LTE area 220 to the IMS-femtocell area 310 while currently performing a communication by an incoming call to the UE 500, , the UE 500 requests the MME 200 to execute hand-over processing via the eNB 210 (step S61). The MME 200 makes an SRVCC request by transmitting an SRVCC req to the GW 100 (step S62). The SRVCC req includes an STN-SR. In a general voice call, upon position registration on the VoLTE IMS side before voice origination, an STN-SR is held on the HLR/HSS and the STN-SR is added to an SRVCC req.

When the MME interface unit 110 of the GW 100 receives the SRVCC req transmitted from the MME 200, the hand-over processing unit 130 requests the FAP data management unit 140 to retrieve a transmission destination of the SRVCC req that is a request signal for making a request for hand-over (SRVCC) of call processing of the UE 500. The FAP data management unit 140 retrieves, when requested to retrieve the transmission destination of the SRVCC req from the hand-over processing unit 130, a femtocell-use base station to be the transmission destination of the SRVCC req among the managed femtocell-use base stations. Next, the FAP data management unit 140 reports the retrieval result to the hand-over processing unit 130. The hand-over processing unit 130 transmits, via the FAP interface unit 120, the SRVCC req to the FAP 300 of the transmission destination indicated in the retrieval result reported from the FAP data management unit 140 (step S63). An SRVCC req transmitted from the GW 100 to the FAP 300 also includes an STN-SR.

Next, the FAP 300 makes a call setting request for the UE 500 to the VoLTE IMS using a protocol of SIP. First, the FAP 300 transmits, by incorporating an STN-SR into an INVITE, the INVITE to the ATCF 420 of the VoLTE IMS (step S64). At that time, the FAP 300 refers to an STN-SR included in the SRVCC req transmitted from the GW 100 and can thereby identify the ATCF 420 to be a transmission destination of the INVITE.

For the INVITE, the VoLTE IMS transmits a provisional response 100 Trying indicating that a trial is currently being made to the FAP 300 (step S65). Further, the VoLTE IMS transmits a 183 Session Progress indicating that the session has progressed to the FAP 300 (step S66). The FAP 300 transmits a PRACK for making a request for acknowledging the provisional responses of steps S65 and S66 to the VoLTE IMS (step S67).

Thereafter, the VoLTE IMS transmits a 200 OK that is a response to step S67 to the FAP 300 (step S68). Further, the VoLTE IMS transmits a 200 OK that is a response to the INVITE of step S64 to the FAP 300 (step S69). Then, the FAP 300 transmits an ACK that is a success response of the INVITE message to the VoLTE IMS (step S70).

Subsequently, the FAP 300 makes, by transmitting an SRVCC Resp, a response (SRVCC response) corresponding to the request of step S63 to the GW 100 (step S71). When the FAP interface unit 120 receives the SRVCC Resp transmitted from the FAP 300, the hand-over processing unit 130 transmits the SRVCC Resp to the MME 200 via the MME interface unit 110 and thereby makes a response (SRVCC response) corresponding to the request of step S62 (step S72).

Next, the MME 200 makes a response corresponding to the request for hand-over processing of step S61 to the UE 500 via the eNB 210 (step S73). Then, the UE 500 is connected to the FAP 300 (step S74).

The FAP 300 then transmits an SRVCC Comp Notification indicating that a voice hand-over using the SRVCC function has been completed to the GW 100 (step S75). Next, the hand-over processing unit 130 of the GW 100 transmits the SRVCC Comp Notification to the MME 200 via the MME interface unit 110 (step S76). The MME 200 having received the SRVCC Comp Notification transmits an SRVCC Comp Ack that is a response thereto to the GW 100 (step S77). The hand-over processing unit 130 of the GW 100 transmits the SRVCC Comp Ack that is a response to step S75 to the FAP 300 via the FAP interface unit 120 (step S78).

Then, among the UE 500, the FAP 300, the PS/AAA, the HSS (VLR), the MME 200, and the HLR/HSS, a normal Inter-RAT RA Update step is executed (step S79).

Next, the VoLTE IMS transmits a BYE to the UE 500 (step S80), and the UE 500 transmits, as a response thereto, a 200 OK to the VoLTE IMS (step S81). A call before voice hand-over is thus disconnected.

The UE 500 originates an MM/CC (step S82). A value of TI at that time is "1000." Further, in the same manner, the FAP 300 originates an MM/CC (step S83). A value of TI at that time is "0000."

Then, among the UE 500, the FAP 300, the P-CSCF 320, the S-CSCF 330, the HSS (VLR), and the HLR/HSS 610, a position registration step of the UE 500 is executed (step S84). At that time, an authentication step of the UE 500 is also executed. Then, a communication after SRVCC is performed.

Thereafter, when the UE 500 terminates the communication (step S85), the UE 500 makes a link disconnection request (DISC) to the FAP 300 using CC processing (step S86). A value of TI at that time is "1000." The FAP 300 then transmits a BYE for disconnecting the call to the VoLTE IMS (step S87). The VoLTE IMS transmits a REL (RELEASE) for making a request for releasing the call to the GMSC 600 (step S88). Further, the VoLTE IMS transmits a 200 OK to the FAP 300 as a response to step S87 (step S89). Further, the GMSC 600 transmits, when completing the release of the call, an RLC to the VoLTE IMS (step S90).

The FAP 300 having received the 200 OK from the VoLTE IMS transmits a link release (REL) to the UE 500 using CC processing (step S91). A value of TI at that time is "0000." The UE 500 transmits a RELCOMP to the FAP 300 (step S92). A value of TI at that time is "1000."

Figs. 10A to 10C are sequence diagrams for illustrating processing at the time when the UE 500 has moved from the LTE area 220 to the IMS-femtocell area 310 while the UE 500 is currently initiating a call by voice origination, in the communication methods in the communication network configurations illustrated in Fig. 6 and Fig. 7.

When the UE 500 has moved from the LTE area 220 to the IMS-femtocell area 310 while the UE 500 is currently initiating a call to another communication device, i.e. executing call origination processing, the UE 500 requests the MME 200 to execute hand-over processing via the eNB 210 (step S101). Then, the MME 200 makes a request for SRVCC to the GW 100 by transmitting an SRVCC req (step S102). When the call currently being initiated by the UE 500 is a general voice call, the SRVCC req includes an STN-SR. In the general voice call, an STN-SR is held on the HLR/HSS upon position registration on the VoLTE IMS side before voice origination, and the STN-SR is added to the SRVCC req. Further, when the call currently being initiated by the UE 500 is an emergency call, the SRVCC req does not include an STN-SR.

When the MME interface unit 110 of GW 100 receives the SRVCC req transmitted from the MME 200, the hand-over processing unit 130 requests the FAP data management unit 140 to retrieve a transmission destination of the SRVCC req that is a request signal for making a request for hand-over (SRVCC) of call processing of the UE 500. The FAP data management unit 140 retrieves, when requested to retrieve the transmission destination of the SRVCC req by the hand-over processing unit 130, a femtocell-use base station to be the transmission destination of the SRVCC req among the managed femtocell-use base stations. Subsequently, the FAP data management unit 140 reports the retrieval result to the hand-over processing unit 130. The hand-over processing unit 130 transmits, via the FAP interface unit 120, the SRVCC req to the FAP 300 of the transmission destination indicated in the retrieval result reported from the FAP data management unit 140 (step S103).

When the call currently being initiated by the UE 500 is a general voice call, an SRVCC req transmitted from the GW 100 to the FAP 300 also includes an STN-SR.

Next, the FAP 300 makes a call setting request for the UE 500 to the VoLTE IMS using a protocol of SIP. First, the FAP 300 transmits, by incorporating an STN-SR into an INVITE, the INVITE to the ATCF 420 of the VoLTE IMS (step S104). At that time, when the call currently being initiated by the UE 500 is a general voice call, the FAP 300 refers to an STN-SR included in the SRVCC req transmitted from the GW 100 and can thereby identify the ATCF 420 to be a transmission destination of the INVITE. Further, when the call currently being initiated by the UE 500 is an emergency call, the SRVCC req transmitted from the GW 100 does not include an STN-SR, and therefore, the FAP 300 transmits, by incorporating an E-STN-SR into the INVITE, the INVITE to the EATF 490 of the VoLTE IMS. The E-STN-SR is a number for assignment on an origination side that originates a call, and is therefore added by the IMS-Femto 340. Here, the FAP 300 adds an E-STN-SR.

For the INVITE, the VoLTE IMS transmits a provisional response 100 Trying indicating that a trial is currently being made to the FAP 300 (step S105). Further, the VoLTE IMS transmits a 183 Session Progress indicating that the session has progressed to the FAP 300 (step S106). The FAP 300 transmits a PRACK for making a request for acknowledging the provisional responses of steps S105 and S106 to the VoLTE IMS (step 5107).

Thereafter, the VoLTE IMS transmits a 200 OK that is a response to step S107 to the FAP 300 (step S108). Further, the VoLTE IMS reports information indicating the state of currently initiating a call and that a call setting request is from the call generation side, to the FAP 300 using an INFO message (step S109). The FAP 300 then transmits, as a response thereto, a 200 OK to the VoLTE IMS (step S110).

Next, the FAP 300 makes, by transmitting an SRVCC Resp, a response (SRVCC response) corresponding to the request of step S103 to the GW 100 (step S111). When the FAP interface unit 120 receives the SRVCC Resp transmitted from the FAP 300, the hand-over processing unit 130 transmits the SRVCC Resp to the MME 200 via the MME interface unit 110 and thereby makes a response (SRVCC response) corresponding to the request of step S102 (step S112).

Subsequently, the MME 200 makes a response corresponding to the request for hand-over processing of step S101 to the UE 500 via the eNB 210 (step S113). Then, the UE 500 is connected to the FAP 300 (step S114).

The FAP 300 then transmits an SRVCC Comp Notification indicating that a voice hand-over using the SRVCC function has been completed to the GW 100 (step S115). The hand-over processing unit 130 of the GW 100 transmits the SRVCC Comp Notification to the MME 200 via the MME interface unit 110 (step S116). The MME 200 having received the SRVCC Comp Notification transmits an SRVCC Comp Ack that is a response thereto to the GW 100 (step S117). The hand-over processing unit 130 of the GW 100 transmits the SRVCC Comp Ack that is a response to step S115 to the FAP 300 via the FAP interface unit 120 (step S118).

Then, among the UE 500, the FAP 300, the PS/AAA, the HSS (VLR), the MME 200, and the HLR/HSS, a normal Inter-RAT RA Update step is executed (step S119).

Next, the UE 500 originates an MM/CC (step S120). A value of TI at that time is "0000." Further, in the same manner, the FAP 300 originates an MM/CC (step S121). A value of TI at that time is "1000."

Then, the UE 500, the FAP 300, the P-CSCF 320, the S-CSCF 330, the HSS (VLR), and the HLR/HSS 610 execute a position registration step of the UE 500 (step S122). At that time, an authentication step of the UE 500 is also executed.

Thereafter, when the incoming side to which the UE 500 is currently initiating a call responds (step S123), the GMSC 600 transmits an ANM that is a response message to the VoLTE IMS (step S124). The ANM is a signal defined in ISUP. This is the same in the following description. The VoLTE IMS then transmits a 200 OK that is a response to the INVITE of step S104 to the FAP 300 (step S125).

The FAP 300 having received the 200 OK from the VoLTE IMS transmits a link connection (CONN) to the UE 500 using CC processing (step S126). A value of TI at that time is "1000." Then, the UE 500 transmits a CONNACK to the FAP 300 (step S127). A value of TI at that time is "0000."

Subsequently, the FAP 300 transmits an ACK that is a response to step S125 to the VoLTE IMS (step S128). The VoLTE IMS transmits a 404 Not Found indicating that a call before voice hand-over has not been found to the UE 500 (step S129), and the UE 500 transmits, as a response thereto, an ACK to the VoLTE IMS (step S130). Then, a communication after SRVCC is performed.

Thereafter, when the UE 500 terminates the communication (step S131), the UE 500 makes a link disconnection request (DISC) to the FAP 300 using CC processing (step S132). A value of TI at that time is "0000." The FAP 300 transmits a BYE for disconnecting the call to the VoLTE IMS (step S133). The VoLTE IMS transmits a REL (RELEASE) for making a request for releasing the call to the GMSC 600 (step S134). Further, the VoLTE IMS transmits a 200 OK to the FAP 300 as a response to step S 133 (step S 135). Further, the GMSC 600 transmits, when completing the release of the call, an RLC to the VoLTE IMS (step S 136).

The FAP 300 having received the 200 OK from the VoLTE IMS transmits a link release (REL) to the UE 500 using CC processing (step S137). A value of TI at that time is "1000." The UE 500 transmits a RELCOMP to the FAP 300 (step S138). A value of TI at that time is "0000."

Figs. 11A to 11C are sequence diagrams for illustrating processing at the time when the UE 500 has moved from the LTE area 220 to the IMS-femtocell area 310 during initiation of a call to the UE 500 by voice incoming, in the communication methods in the communication network configurations illustrated in Fig. 6 and Fig. 7.

When the UE 500 has moved from the LTE area 220 to the IMS-femtocell area 310 while another communication device is currently initiating a call to the UE 500, i.e. the UE 500 is currently executing incoming call processing, the UE 500 requests the MME 200 to execute hand-over processing via the eNB 210 (step S151). Then, the MME 200 makes a request for SRVCC to the GW 100 by transmitting an SRVCC req (step S152). The SRVCC req includes an STN-SR. In a general voice call, an STN-SR is held on the HLR/HSS upon position registration on the VoLTE IMS side before voice origination, and the STN-SR is added to the SRVCC req.

When the MME interface unit 110 of the GW 100 receives the SRVCC req transmitted from the MME 200, the hand-over processing unit 130 requests the FAP data management unit 140 to retrieve a transmission destination of the SRVCC req that is a request signal for making a request for hand-over (SRVCC) of call processing of the UE 500. The FAP data management unit 140 retrieves, when requested to retrieve the transmission destination of the SRVCC req from the hand-over processing unit 130, a femtocell-use base station to be the transmission destination of the SRVCC req among the managed femtocell-use base stations. Subsequently, the FAP data management unit 140 reports the retrieval result to the hand-over processing unit 130. The hand-over processing unit 130 transmits, via the FAP interface unit 120, the SRVCC req to the FAP 300 of the transmission destination indicated in the retrieval result reported from the FAP data management unit 140 (step S 153).

An SRVCC req transmitted from the GW 100 to the FAP 300 also includes an STN-SR.

Then, the FAP 300 makes a call setting request for the UE 500 to the VoLTE IMS using a protocol of SIP. First, the FAP 300 transmits the INVITE to the ATCF 420 of the VoLTE IMS, by incorporating an STN-SR into an INVITE (step S154). At that time, the FAP 300 refers to an STN-SR included in the SRVCC req transmitted from the GW 100 and can thereby identify the ATCF 420 to be a transmission destination of the INVITE.

For the INVITE, the VoLTE IMS transmits a provisional response 100 Trying indicating that a trial is currently being made to the FAP 300 (step S155). Further, the VoLTE IMS transmits a 183 Session Progress indicating that the session has progressed to the FAP 300 (step S156). The FAP 300 transmits a PRACK for making a request for acknowledging the provisional responses of steps S155 and S156 to the VoLTE IMS (step S157).

Thereafter, the VoLTE IMS transmits a 200 OK that is a response to step S157 to the FAP 300 (step S158). Further, the VoLTE IMS reports information indicating the state of currently initiating a call and that a call setting request is from the call incoming side, to the FAP 300 using an INFO message (step S159). Then, the FAP 300 transmits, as a response thereto, a 200 OK to the VoLTE IMS (step S160).

The FAP 300 makes, by transmitting an SRVCC Resp, a response (SRVCC response) corresponding to the request of step S153 to the GW 100 (step S161). When the FAP interface unit 120 receives the SRVCC Resp transmitted from the FAP 300, the hand-over processing unit 130 transmits the SRVCC Resp to the MME 200 via the MME interface unit 110 and thereby makes a response (SRVCC response) corresponding to the request of step S152 (step S162).

Next, the MME 200 makes a response corresponding to the request for hand-over processing of step S 151 to the UE 500 via the eNB 210 (step S163). Then, the UE 500 is connected to the FAP 300 (step S164).

The FAP 300 then transmits an SRVCC Comp Notification indicating that a voice hand-over using the SRVCC function has been completed to the GW 100 (step S165). Next, the hand-over processing unit 130 of the GW 100 transmits the SRVCC Comp Notification to the MME 200 via the MME interface unit 110 (step S166). The MME 200 having received the SRVCC Comp Notification transmits an SRVCC Comp Ack that is a response thereto to the GW 100 (step S167). Subsequently, the hand-over processing unit 130 of the GW 100 transmits an SRVCC Comp Ack that is a response to step S165 to the FAP 300 via the FAP interface unit 120 (step S168).

Thereafter, among the UE 500, the FAP 300, the PS/AAA, the HSS (VLR), the MME 200, and the HLR/HSS, a normal Inter-RAT RA Update step is executed (step S169).

The UE 500 originates an MM/CC (step S170). A value of TI at that time is "1000." Further, in the same manner, the FAP 300 originates an MM/CC (step S171). A value of TI at that time is "0000."

Then, among the UE 500, the FAP 300, the P-CSCF 320, the S-CSCF 330, the HSS (VLR), and the HLR/HSS 610, a position registration step of the UE 500 is executed (step S172). At that time, an authentication step of the UE 500 is also executed.

Thereafter, when the UE500 that is a call incoming side responds (step S173), the UE 500 transmits a link connection (CONN) to the FAP 300 using CC processing (step S174). A value of TI at that time is "1000." The FAP 300 makes a report indicating that the call has been received to the VoLTE IMS using an INFO message (step S175). The VoLTE IMS transmits a 200 OK that is a response to the INFO message to the FAP 300 (step S176). Further, the VoLTE IMS transmits an ANM to the GMSC 600 (step S 177). Then, the VoLTE IMS transmits a 200 OK that is a response to the INVITE of step S154 to the FAP 300 (step S178).

The FAP 300 having received the 200 OK from the VoLTE IMS transmits a CONNACK that is a response to step S174 to the UE 500 (step S179). A value of TI at that time is "0000."

Subsequently, the FAP 300 transmits an ACK that is a response to step S178 to the VoLTE IMS (step S180). The VoLTE IMS transmits a CANCEL to the UE 500 in order to cancel the INVITE message transmitted to the UE 500 during incoming call processing (step S181), and the UE 500 transmits, as a response thereto, a 200 OK to the VoLTE IMS (step S 182). Further, the UE 500 transmits, since receiving the CANCEL transmitted from the VoLTE IMS in step S181, a 487 Request Terminated indicating that the request by the INVITE message has been terminated to the VoLTE IMS (step S 183). The VoLTE IMS transmits, as a response thereto, an ACK to the UE 500 (step S184). Then, a communication after SRVCC is performed.

Thereafter, when the UE 500 terminates the communication (step S185), the UE 500 makes a link disconnection request (DISC) to the FAP 300 using CC processing (step S186). A value of TI at that time is "1000." The FAP 300 transmits a BYE for disconnecting the call to the VoLTE IMS (step S187). The VoLTE IMS transmits a REL (RELEASE) for making a request for releasing the call to the GMSC 600 (step S 188). Further, the VoLTE IMS transmits a 200 OK to the FAP 300 as a response to step S 187 (step S189). Further, the GMSC 600 transmits, when completing the release of the call, an RLC (Release Complete) to the VoLTE IMS (step S190).

The FAP 300 having received the 200 OK from the VoLTE IMS transmits a link release (REL) to the UE 500 using CC processing (step S191). A value of TI at that time is "0000." Then, the UE 500 transmits a RELCOMP to the FAP 300 (step S192). A value of TI at that time is "1000."

In this manner, in the present exemplary embodiment, between the MME 200 and the FAP 300, an interface function with the MME 200, an interface function with the FAP 300, and the GW 100 including an SRVCC function are disposed. When the GW 100 receives a request for hand-over of a call from the MME 200, the GW 100 makes a request for handing over the call to the FAP 300. Thereby, when the UE 500 currently performing a voice communication or currently initiating a call using a VoLTE function has moved from the LTE area 220 to the IMS-femtocell area 310, it is possible to hand over the voice communication or the initiation of the call.

Further, as a modified example, a mode in which the FAP 300 includes the above-described function of the GW 100 is conceivable.

The above-described processing executed by the components included in the GW 100 may be implemented by logic circuits produced depending on the purposes, respectively. Further, it is possible that a computer program (hereinafter, referred to as a program) in which processing contents are described as steps is recorded on a recording medium (or referred to also as a storage medium) readable by the GW 100 and the program recorded on the recording medium is caused to be read by the GW 100 to be executed. The recording medium readable by the GW 100 represents a movable recording medium such as a floppy (registered trademark) disk, a magneto-optical disc, a DVD (Digital Versatile Disk), and a CD (Compact Disc), and represents, in addition thereto, a memory such as a ROM (Read Only Memory), a RAM (Random Access Memory), and an HDD (Hard Disk Drive) incorporated in the GW 100. The program recorded on the recording medium is read by a CPU (Central Processing Unit) (not illustrated) included in the GW 100, and the same processing as described above is executed via control by the CPU. The CPU operates as a computer that executes a program read from a recording medium recorded with the program.

While the present invention has been described with reference to the exemplary embodiments, the present invention is not limited to the exemplary embodiments. The constitution and details of the present invention can be subjected to various modifications which can be understood by those skilled in the art without departing from the scope of the present invention.

A part or all of the exemplary embodiments can be described as, but not limited to, the following supplementary notes.

(Supplementary Note 1) A gateway device that is connected to a control node disposed on an LTE (Long Term Evolution) network and a femtocell-use base station having an IMS (IP Multimedia Subsystem)-femtocell area as a communication area, and causes, when a mobile terminal currently performing a voice communication or currently initiating a call moves from a communication area of the LTE network to the IMS-femtocell area, call processing of the mobile terminal to be handed over from the control node to the femtocell-use base station.

(Supplementary Note 2) The gateway device according to Supplementary Note 1, including:
an MME interface unit including an interface function with the control node;
an FAP interface unit including an interface function with the femtocell-use base station; and
a hand-over processing unit that transmits a request signal for making a request for handing over the call processing to the femtocell-use base station via the FAP interface unit when the MME interface unit receives a predetermined signal transmitted from the control node.

(Supplementary Note 3) The gateway device according to Supplementary Note 2, further including an FAP data management unit that manages the femtocell-use base station, wherein
the hand-over processing unit requests the FAP data management unit to retrieve a transmission destination of the request signal when the MME interface unit receives a predetermined signal transmitted from the control node, and transmits the request signal, based on a retrieval result reported from the FAP data management unit, and
the FAP data management unit retrieves, when being requested to retrieve a transmission destination of the request signal from the hand-over processing unit, the transmission destination of the request signal from managed femtocell-use base stations and reports the retrieval result to the hand-over proceeding unit.

(Supplementary Note 4) The gateway device according to Supplementary Note 2 or 3, wherein the hand-over processing unit transmits, when a first response signal corresponding to the request signal is transmitted from the femtocell-use base station after transmitting the request signal to the femtocell-use base station, a second response signal corresponding to the predetermined signal received by the MME interface unit to the control node via the MME interface unit.

(Supplementary Note 5) The gateway device according to any one of Supplementary Notes 2 to 4, wherein the hand-over processing unit causes call processing of the mobile terminal to be handed over by using an SRVCC (Single Radio Voice Call Continuity) function.

(Supplementary Note 6) A femtocell-use base station having an IMS-femtocell area as a communication area and transmitting a message for making a call setting request to a predetermined server including a VoLTE (Voice over LTE) function, when receiving a request for handing over call processing of a mobile terminal currently performing a voice communication or currently initiating a call from a control node disposed on an LTE (Long Term Evolution) network, from a gateway device.

(Supplementary Note 7) A communication system including:
a mobile terminal that performs a voice communication;
a control node disposed on an LTE (Long Term Evolution) network;
a femtocell-use base station having an IMS (IP Multimedia Subsystem)-femtocell area as a communication area; and
a gateway device that is connected to the control node and the femtocell-use base station and causes, when the mobile terminal currently performing a voice communication or currently initiating a call moves from a communication area of the LTE network to the IMS-femtocell area, call processing of the mobile terminal to be handed over from the control node to the femtocell-use base station, wherein
the femtocell-use base station transmits a message for making a call setting request to a predetermined server including a VoLTE (Voice over LTE) function, when receiving a request for handing over call processing of the mobile terminal from the control node, from the gateway device.

(Supplementary Note 8) A communication method in a communication system including a mobile terminal that performs a voice communication, a control node disposed on an LTE (Long Term Evolution) network, a femtocell-use base station having an IMS (IP Multimedia Subsystem)-femtocell area as a communication area, and a gateway device connected to the control node and the femtocell-use base station, the method including:
processing by the gateway device, of causing, when the mobile terminal currently performing a voice communication or currently initiating a call moves from a communication area of the LTE network to the IMS-femtocell area, call processing of the mobile terminal to be handed over from the control node to the femtocell-use base station; and
processing by the femtocell-use base station, of transmitting a message for making a call setting request to a predetermined server including a VoLTE (Voice over LTE) function, when receiving a request for handing over call processing of the mobile terminal from the control node, from the gateway device.

(Supplementary Note 9) A communication method including processing of causing, when a mobile terminal currently performing a voice communication or currently initiating a call moves from a communication area of an LTE (Long Term Evolution) network to an IMS (IP Multimedia Subsystem)-femtocell area, call processing of the mobile terminal to be handed over from a control node disposed on an access network in the LTE network to a femtocell-use base station having the IMS-femtocell area as a communication area.

(Supplementary Note 10) A program for causing the steps of,
on a gateway device connected to a control node disposed on an LTE (Long Term Evolution) network and a femtocell-use base station having an IMS (IP Multimedia Subsystem)-femtocell area as a communication area
handing over, when a mobile terminal currently performing a voice communication or currently initiating a call moves from a communication area of the LTE network to the IMS-femtocell area, call processing of the mobile terminal from the control node to the femtocell-use base station.

Further, this application is based upon and claims the benefit of priority from Japanese patent application No. 2014-116633, filed on June 5, 2014, the disclosure of which is incorporated herein in its entirety by reference.

### Reference signs List

- 100: GW
- 110: MME interface unit
- 120: FAP interface unit
- 130: Hand-over processing unit
- 140: FAP data management unit
- 200: MME
- 210: eNB
- 220: LTE area
- 230: DNS
- 240: SPGW
- 300: FAP
- 310: IMS-femtocell area
- 320, 410: P-CSCF
- 330, 450: S-CSCF
- 340: IMS-Femto
- 400: IMS
- 420: ATCF
- 430: ATGW
- 440: AS
- 460: MGCF
- 470: MGW
- 480: E-CSCF
- 490: EATF
- 500: UE
- 600: GMSC
- 610: HLR/HSS

## Claims

1. A gateway device that is connected to a control node disposed on an Long Term Evolution (LTE) network and a femtocell-use base station having an IP Multimedia Subsystem (IMS) -femtocell area as a communication area, and causes, when a mobile terminal currently performing a voice communication or currently initiating a call moves from a communication area of the LTE network to the IMS-femtocell area, call processing of the mobile terminal to be handed over from the control node to the femtocell-use base station.

2. The gateway device according to claim 1, further comprising:
an Mobility Management Entity (MME) interface means for including an interface function with the control node;
an Femto Access Point (FAP) interface means for including an interface function with the femtocell-use base station; and
a hand-over processing means for transmitting a request signal for making a request for handing over the call processing to the femtocell-use base station via the FAP interface means when the MME interface means receives a predetermined signal transmitted from the control node.

3. The gateway device according to claim 2, further comprises an FAP data management means for managing the femtocell-use base station, wherein the hand-over processing means requests the FAP data management means to retrieve a transmission destination of the request signal when the MME interface means receives a predetermined signal transmitted from the control node, and transmits the request signal, based on a retrieval result reported from the FAP data management means, and
the FAP data management means retrieves, when being requested to retrieve a transmission destination of the request signal from the hand-over processing means, the transmission destination of the request signal from managed femtocell-use base stations and reports the retrieval result to the hand-over proceeding means.

4. The gateway device according to claim 2 or 3,
wherein the hand-over processing means transmits, when a first response signal corresponding to the request signal is transmitted from the femtocell-use base station after transmitting the request signal to the femtocell-use base station, a second response signal corresponding to the predetermined signal received by the MME interface means to the control node via the MME interface means.

5. The gateway device according to any one of claims 2 to 4,
wherein the hand-over processing means causes call processing of the mobile terminal to be handed over by using an Single Radio Voice Call Continuity (SRVCC) function.

6. A femtocell-use base station having an IMS-femtocell area as a communication area and
transmitting a message for making a call setting request to a predetermined server including a Voice over LTE (VoLTE) function, when receiving a request for handing over call processing of a mobile terminal currently performing a voice communication or currently initiating a call from a control node disposed on an Long Term Evolution (LTE) network, from a gateway device.

7. A communication system comprising:
a mobile terminal that performs a voice communication;
a control node disposed on an Long Term Evolution (LTE) network;
a femtocell-use base station having an IP Multimedia Subsystem (IMS) -femtocell area as a communication area; and
a gateway device that is connected to the control node and the femtocell-use base station and causes, when the mobile terminal currently performing a voice communication or currently initiating a call moves from a communication area of the LTE network to the IMS-femtocell area, call processing of the mobile terminal to be handed over from the control node to the femtocell-use base station, wherein
the femtocell-use base station transmits a message for making a call setting request to a predetermined server including a Voice over LTE (VoLTE) function, when receiving a request for handing over call processing of the mobile terminal from the control node, from the gateway device.

8. A communication method in a communication system including a mobile terminal that performs a voice communication, a control node disposed on an Long Term Evolution (LTE) network, a femtocell-use base station having an IP Multimedia Subsystem (IMS) -femtocell area as a communication area, and a gateway device connected to the control node and the femtocell-use base station, the method comprising:
causing, by the gateway device, when the mobile terminal currently performing a voice communication or currently initiating a call moves from a communication area of the LTE network to the IMS-femtocell area, call processing of the mobile terminal to be handed over from the control node to the femtocell-use base station; and
transmitting, by the femtocell-use base station, a message for making a call setting request to a predetermined server including a Voice over LTE (VoLTE) function, when receiving a request for handing over call processing of the mobile terminal from the control node, from the gateway device.

9. A communication method comprising:
causing, when a mobile terminal currently performing a voice communication or currently initiating a call moves from a communication area of an Long Term Evolution (LTE) network to an IP Multimedia Subsystem (IMS)-femtocell area, call processing of the mobile terminal to be handed over from a control node disposed on an access network in the LTE network to a femtocell-use base station having the IMS-femtocell area as a communication area.

10. A storage medium storing a program for causing a method, the method comprising:
on a gateway device connected to a control node disposed on an Long Term Evolution (LTE) network and a femtocell-use base station having an IP Multimedia Subsystem (IMS) -femtocell area as a communication area,
handing over, when a mobile terminal currently performing a voice communication or currently initiating a call moves from a communication area of the LTE network to the IMS-femtocell area, call processing of the mobile terminal from the control node to the femtocell-use base station.
